# EUROPEAN PATENT SPECIFICATION

(11) **EP 4 089 297 B1**
(45) Date of publication and mention of the grant of the patent: **24.07.2024**
(21) Application number: 22173153.2
(22) Date of filing: 13.05.2022
(51) Int. Cl.: F16D 55/08, F16J 15/3232, F16D 55/00

(54) **BRAKE CALIPER OF A DISC FOR A DISC BRAKE**
BREMSSATTEL EINER SCHEIBE FÜR EINE SCHEIBENBREMSE
ÉTRIER DE FREIN D'UN DISQUE POUR UN FREIN À DISQUE

(30) Priority: 13.05.2021 IT 202100012368
(43) Date of publication of application: 16.11.2022
(73) Proprietor: Brembo S.p.A., 24035 Curno (Bergamo) (IT)
(72) Inventor: BOSIS, Alberto, I-24035 Curno, BERGAMO (IT)
(74) Representative: Crippa, Paolo Ernesto

(56) References cited:
- EP-A1- 0 854 985
- EP-A1- 3 078 883
- DE-A1- 2 445 645
- DE-A1- 4 339 652
- JP-A- 2014 190 415
- US-A1- 2011 209 953

## Description

**.** The present invention relates to a brake caliper gasket and to a mold for making said gasket, and to a brake caliper comprising said gasket.

**.** In particular, in a disc brake, the brake caliper is arranged straddling the peripheral outer margin of a brake disc. The brake caliper usually comprises a body having two elongated elements, or portions, which are arranged to face opposite braking surfaces of a disc. Friction pads are provided arranged between each elongated element of the caliper and the braking surfaces of the brake disc. At least one of the elongated elements of the caliper body has at least one actuator, e.g., a cylinder adapted to accommodate a hydraulic piston capable of applying a thrust action on the pads, abutting them against the braking surfaces of the disc to apply the braking action on the vehicle.

**.** The brake calipers are usually constrained to a supporting structure which remains firmly connected to the vehicle, such as, for example, a suspension of a vehicle, more particularly a fork or swingarm of the suspension of a motor vehicle.

**.** In a typical arrangement, one of the two elongated elements has two or more attachment portions of the caliper body to the supporting structure, e.g., by providing slots or eyelets, e.g., arranged axially, or through holes, e.g., arranged radially, adapted to receive screws for fixing the caliper, which are accommodated with their ends in threaded holes provided on the caliper support.

**.** In a typical caliper body construction, the elongated elements arranged facing the braking surfaces of the disc are connected together by bridge-like elements arranged straddling the disc.

**.** In particular, a service and/or parking disc brake comprises a brake disc which rotates together with a wheel of a vehicle. Brake pads face the brake disc and are accommodated in a brake caliper located straddling said brake disc. Said pads are biased either directly or indirectly to abut against the opposite braking surfaces of said brake disc by actuation means of various types, including hydraulic or, especially in case of parking brakes, a lever. This lever is fixed to a rotating shaft which activates a mechanism for converting the rotation into a linear thrust displacement of at least one brake pad, in case of the so-called floating calipers.

**.** A sealing element or gasket is provided between the lever, the rotating shaft and the caliper body.

**.** This sealing element is pressed on a circumference of the rotating shaft and placed in an appropriate housing provided in the caliper and lever. This gasket is integral to the caliper and slides over the surfaces of the lever and rotating shaft.

**.** Solutions of this type are known, for example, from US2008135354A1**,** CN1920324A**,** US2004245055A1**,** US2009014257A1**,** US2015053511A1**,** US2015308525A1**,** US9850971B1**,** US20090107777 and DE 24 45 645 A1.

**.** However, this continuous sliding of the sealing element and of the rotating shaft and lever during the braking operations causes loosening over time, which deteriorates the sealing efficiency.

**.** Therefore, it is not possible to effectively prevent moisture and foreign substances from entering the caliper housing or shaft.

**.** As a result, stains form in the brake due to the accumulation of dirt or the formation of rust on a portion of the rotating shaft and/or of the pad actuation mechanism due to the penetration of moisture and foreign substances, deteriorating the braking performance and above all the correct brake activation performance.

. Therefore, the need is felt to obtain a strong seal with the rotating shaft, the lever and the caliper body, but at the same time to avoid the locking of the actuator shaft due to corrosion as a result of water infiltrations.

**.** Another need that remains strongly felt is to obtain resistance of the gasket against the contaminants present in the vehicle underbody, such as mineral oil / gasoline / Diesel / pressure washers.

**.** These and further objects are achieved by a gasket as described in claim **1** attached thereto, a brake caliper according to claim **8** and a mold as described in claim **18.**

**.** Further objects, solutions and advantages are present in the embodiments described below and claimed in the dependent claims appended hereto.

**.** The suggested solutions make it possible to keep the caliper body gasket in static contact, thus without relative movement, with the rotating shaft and the lever, leaving the sealing by sliding function only to the contact with the caliper body.

**.** Thanks to the described shapes of the gasket, the gasket can be fitted and guarantee an elastic deformation of the inner radial sealing lip comprised in the 250 - 50% range, preferably in the 300 - 40% range, a range which allows an excellent seal durable over time and at the same time does not hinder the step of fitting the gasket above the shaft sealing portion of the rotating shaft.

**.** The gasket shapes suggested by the present invention allow the gasket itself to work as a spring between the lever and the caliper sliding surface of the caliper body, allowing elastic compression also in the axial direction, e.g., a compression of even to 200.

**.** This simple mounting of the gasket on the rotating shaft still makes it possible to achieve a seal between the rotating shaft and gasket even greater than 120Bar. The embodiments suggested with the present invention make it possible to achieve a degree of fluid seal equal to IP68.

**.** Furthermore, the contact between the gasket and the lever and simultaneously of the gasket and the caliper body is increased in terms of sealing performance, but at the same time without increasing the contact pressure, above all the contact and sliding pressure between the gasket and the caliper body. This effect is primarily guaranteed by the axial alignment between the first annular outer lip and the first annular inner lip.

**.** The alignment, or axial direction overlap, of the first lips allows an effective deformation of the first lips pressed by the lever against the caliper body, but at the same time limits the friction action between the gasket and the caliper sliding surface of the caliper body, limiting the gasket wear and thus its deterioration and loss of seal over time.

**.** Furthermore, the optimal fluid seal of the gasket with limited friction reduces the amount of sticking or residual torque experienced in the activation of the lever due to the transition between static and dynamic friction when starting the rotation of the lever. The reduction of this residual drive torque makes it possible to have a much more precise and sensitive device, a requirement that is becoming more and more sought after, for example, but not only, in electro-actuated brakes provided with feedback-actuated drives.

**.** This effect is further accentuated by the further axial alignment between the second annular outer lip and the second annular inner lip, leaving depressions, one inner and one outer, between said first and second lips.

**.** These and other advantages are emphasized by providing a symmetrical gasket shape relative to a plane orthogonal to the rotation axis of the rotating shaft.

**.** The symmetry of the gasket, in addition to emphasizing the optimal low-friction seal, makes assembly extremely simple, because it makes the gasket usable in all its orientations, which are mutually equivalent. Assembling the gasket without providing an orientation makes the brake assembly process much faster and at the same time safer, always guaranteeing optimal gasket performance.

**.** The use of a gasket comprising silicone allows to have excellent sealing performance and at the same time to have a gasket adapted to withstand various aggressive agents, as chemical fluids such as mineral oil / gasoline / Diesel / pressure washers.

**.** Various embodiments of the invention are now described below through embodiments provided only by way of non-limiting example, while in particular referencing the accompanying figures, in which:

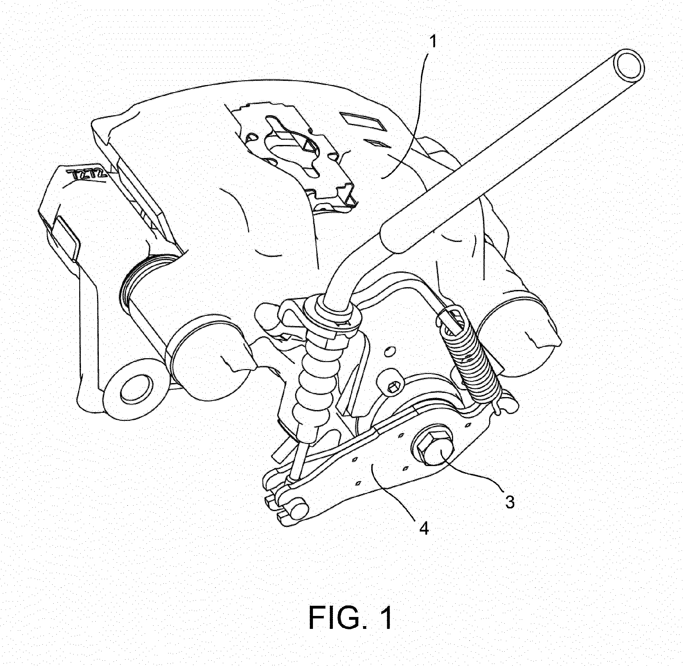

- figure 1 shows an axonometric view of a brake caliper having an actuation lever of a rotating actuation member, i.e., observing the caliper from its inner-vehicle side;

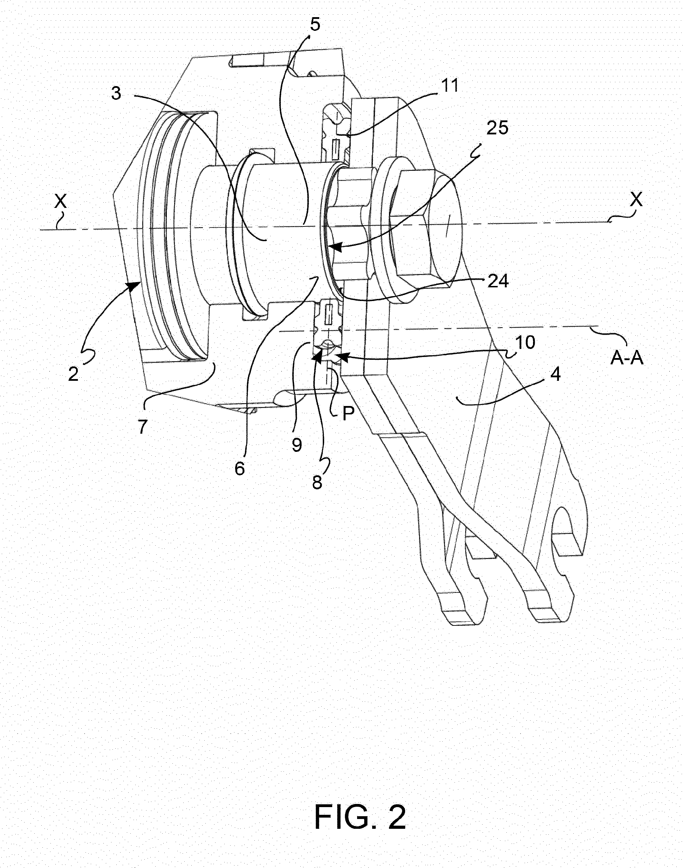

- figure 2 shows an axonometric view of the brake caliper of figure 1 shown sectioned and locally in which the lever connects to the rotating shaft that is accommodated in the caliper body;

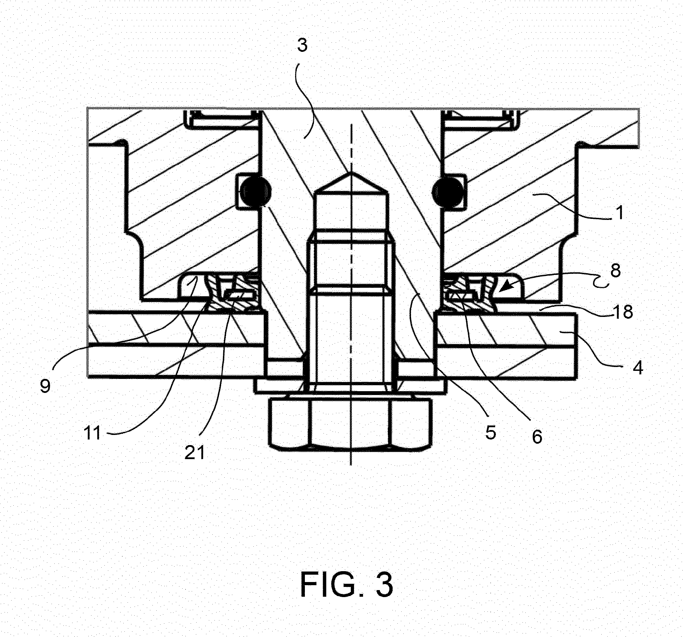

- figure 3 shows a cross-section of the detail of the caliper of figure 2 taken along a plane passing through the rotation axis of the rotating shaft;

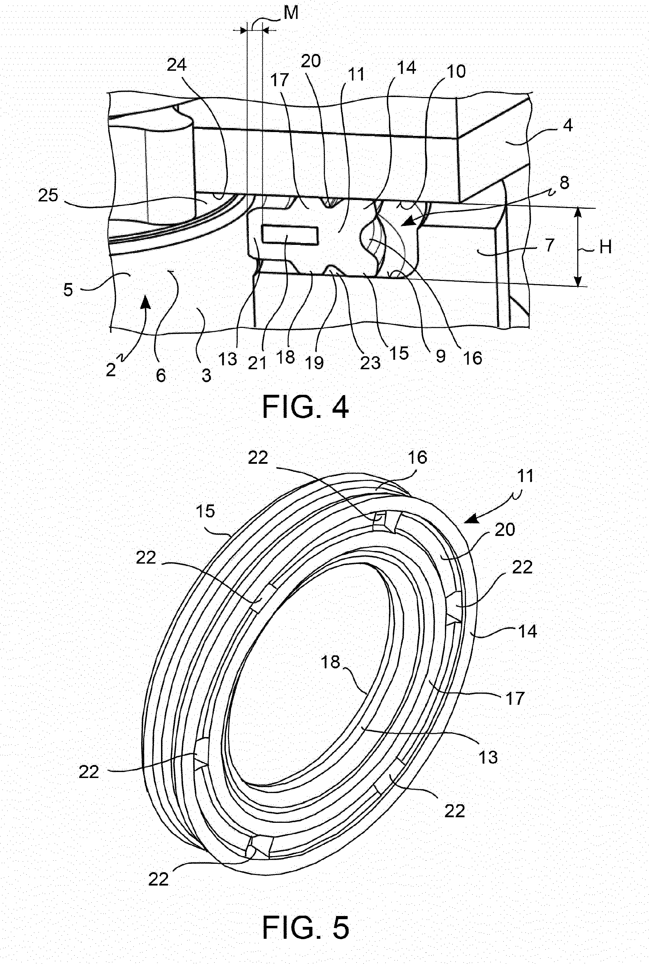

- figure 4 shows an axonometric section view of a detail of the gasket working between the lever, the rotating shaft and the caliper body;
- figure 5 shows an axonometric view of a gasket according to the invention;

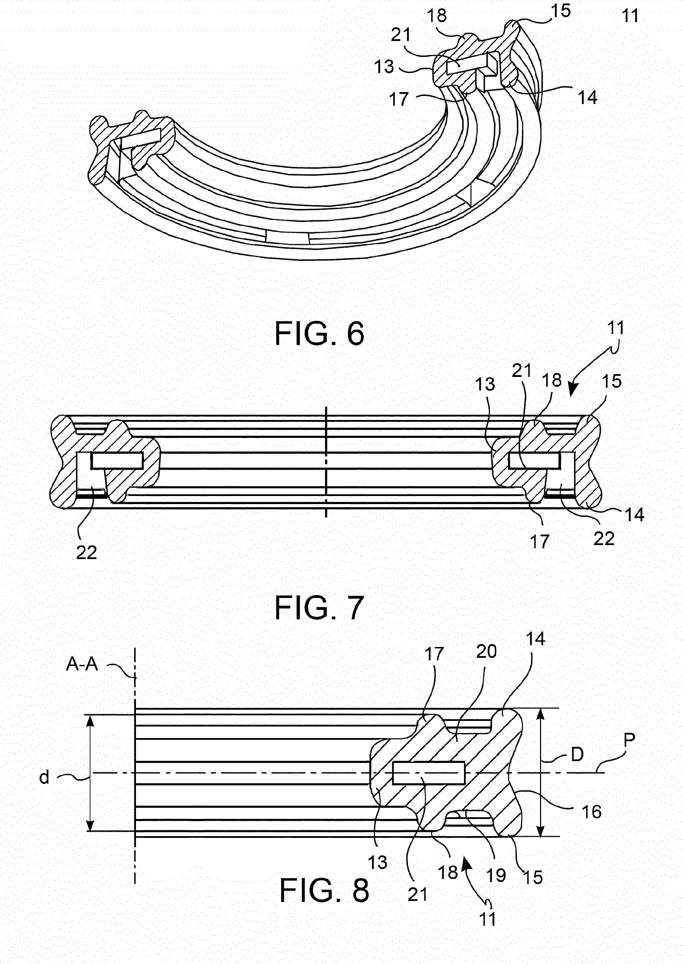

- figure 6 shows an axonometric section view of the gasket of figure 5 taken along a plane containing the axial direction and passing through two opposite support openings adapted to receive support elements of the metal ring in the mold;
- figure 7 shows a side section view of the section shown in figure 6;
- figure 8 shows a section view of a detail of the gasket of figure 5.

**.** According to a general embodiment, a caliper body gasket 11 comprises an annular gasket body 12.

**.** Said gasket 11 comprises at least one inner radial sealing lip 13 adapted to come into contact with an outer contact surface 6 of a rotating shaft 3 having rotation axis X-X defining an axial direction A-A.

**.** Said gasket 11 comprises at least two first lips 14, 15.

**.** Said at least two first lips 14, 15 are annular and protrude from opposite sides of said gasket body 12, forming a first outer lip 14 and a first inner lip 15.

**.** Said first outer lip 14 and first inner lip 15 are axially aligned A-A.

**.** Said first outer lip 14 is adapted to come into contact with at least one lever supporting surface 10 of a lever 4.

**.** Said first inner lip 15 is adapted to come into sliding contact with at least one caliper sliding surface 9 and a caliper body 7.

**.** According to an embodiment, said at least two first lips 14, 15 protrude from said gasket body 12 from opposite sides according to directions that are inclined with respect to said axial direction A-A and a radial direction R-R orthogonal to said axial direction A-A, thus forming therebetween a sideways "V"-shaped loop 16.

**.** Said loop 16 has concavity facing in radial direction R-R facing away from said inner radial sealing lip 13.

**.** By virtue of this inclined arrangement of the first two lips 14, 15, the elastic compressive deformation determined by an axial pressing, i.e., directed in the axial direction A-A, is less resistant than an axial compression of the same first lips which extend protruding in the axial direction A-A only, because they also undergo a flexural deformation when inclined.

**.** According to an embodiment, said gasket 11 comprises at least two annular second lips 17, 18, which protrude from opposite sides of said gasket body 12, forming a second outer lip 17 and a second inner lip 18.

**.** Said second outer lip 17 and second inner lip 18 are axially aligned A-A.

. Said second outer lip 17 is adapted to come into contact with said at least one lever supporting surface 10.

. Said second inner lip 18 is adapted to come into sliding contact with said at least one caliper sliding surface 9.

**.** According to an embodiment, said at least two second lips 17, 18 protrude from said gasket body 12 on opposite sides according to a same axial direction A-A.

**.** By virtue of the extension of the two second lips 17, 18 in the axial direction A-A, the elastic compressive deformation determined by an axial pressing, i.e., directed in the axial direction A-A, is more resistant than a deformation of inclined oriented lips, because in this case, they work only in compression and not also in flexion.

**.** According to an embodiment, when said gasket 11 is unloaded and therefore not pressed, said first lips 14, 15 extend in axial direction A-A of a first defined first lip axial extension "D".

**.** When said gasket 11 is unloaded and therefore not pressed, said second lips 17, 18 extend in axial direction A-A of a second defined second lip axial extension "d".

**.** According to an embodiment, said first defined first lip axial extension "D" is greater than said second defined second lip axial extension "d".

**.** According to an embodiment, an inner depression 19 is comprised between said first inner lip 15 and said second inner lip 18.

**.** According to an embodiment, said inner depression 19 is adapted to contain lubricating fluid, e.g., grease.

**.** According to an embodiment, said gasket 11 has a symmetrical shape relative to a midplane "P", e.g., passing through the centerline of the orthogonal section of the annular extension of the gasket body 12 and orthogonal to said axial direction A-A.

**.** According to the invention, said gasket 11 comprises at least one metal ring 21.

**.** Said metal ring is at least partially embedded in said annular gasket body 12.

**.** By virtue of the provision of the metal ring 21, it is possible to define the pressing of the inner radial sealing lip 13, once the diameter, or transverse dimension, of the rotating shaft 3, and in particular of the shaft sealing portion 5 against which said gasket must work tightly, is defined.

**.** According to an embodiment, said gasket 11 comprises an elastic material, e.g., silicone rubber.

**.** According to an embodiment, said gasket 11 has a symmetrical shape relative to a midplane P passing through the centerline of the gasket body 12 and orthogonal to said axial direction A-A, except for support openings 22 created from supports for keeping a metal ring 21 inside a mold for molding said gasket body 12 about said metal ring 21.

**.** The present invention further relates to a brake caliper 1 comprising a gasket according to any one of the embodiments described above.

**.** According to a general embodiment, said brake caliper 1 comprises at least one rotating actuating member 2.

**.** Said rotating actuating member 2 comprises at least one rotating shaft 3 and a lever 3 associated with said rotating shaft 3.

**.** Said rotating shaft 3 has a rotational axis X-X, which defines an axial direction A-A.

**.** Said rotating shaft 3 comprises a shaft seal portion 5 delimited externally by an outer contact surface 6.

**.** Said brake caliper 1 comprises a caliper body 7. Said at least one rotating shaft 3 is partially inserted into said caliper body 7.

**.** Said brake caliper 1 further comprises a gasket chamber 8. Said gasket chamber 8 is at least partially delimited by at least one caliper sliding surface 9 of said caliper body 7, at least one lever supporting surface 10 of said lever 4 and by said outer contact surface 6 of said at least one rotating shaft 3.

**.** Said brake caliper 1 further comprises at least one gasket 11.

**.** Said at least one gasket 11 comprises an annular gasket body 12.

**.** Said at least one gasket 11 comprises at least one inner radial sealing lip 13 in contact with said outer contact surface 6 of said at least one rotating shaft 3.

**.** Said at least one gasket 11 comprises at least two first lips 14, 15.

**.** Said at least two first lips 14, 15 are annular and protrude from opposite sides of said gasket body 12, forming a first outer lip 14 and a first inner lip 15.

**.** Said first outer lip 14 and first inner lip 15 are mutually and axially aligned A-A.

**.** Said first outer lip 14 is in contact with said at least one lever supporting surface 10.

**.** Said first inner lip 15 in sliding contact with said at least one caliper sliding surface 9.

**.** According to an embodiment, said at least two first lips 14, 15 protrude from said gasket body 12 on opposite sides according to an axial direction A-A.

**.** According to an embodiment, said at least two first lips 14, 15 protrude from said gasket body 12 on opposite sides according to directions, which are inclined with respect to both said axial direction A-A and a radial direction R-R, which is orthogonal to said axial direction A-A, thus forming therebetween a sideways "V"-shaped loop 16 with concavity directed in radial direction R-R facing away from said rotating shaft 3.

**.** According to an embodiment, said at least one gasket 11 comprises at least two second lips 17, 18, which protrude from opposite sides of said gasket body 12, thus forming a second outer lip 17 and a second inner lip 18.

**.** Said annular second outer lip 17 and second inner lip 18 are axially aligned A-A.

**.** Said second outer lip 17 is in contact with said at least one lever supporting surface 10.

**.** Said second inner lip 18 is in sliding contact with said at least one caliper sliding surface 9.

**.** According to an embodiment, an inner depression 19 that, with said caliper sliding surface 9, delimits a lubricant chamber 23 adapted to contain a lubricant, e.g., grease, is comprised between said first inner lip 15 and said second inner lip 18.

**.** According to an embodiment, an outer depression 20 is comprised between said first outer lip 14 and said second outer lip 17.

**.** According to an embodiment, when said gasket 11 is unloaded, therefore when it is not pressed by the lever 4 against the caliper body 7, said first lips 14, 15 extend in axial direction A-A of a first defined first lip axial extension "D".

**.** When said gasket 11 is unloaded, thus when it is not pressed by the lever 4 against the caliper body 7, said second lips 17, 18 extend in axial direction A-A of a second defined second lip axial extension d".

**.** Said first defined first lip axial extension "D" is greater than said second defined second lip axial extension "d".

**.** According to an embodiment, said gasket 11 has a symmetrical shape relative to a midplane "P" passing through the gasket body 12 and orthogonal to said axial direction A-A.

**.** According to an embodiment, said gasket 11 comprises at least one metal ring 21.

**.** According to an embodiment, said metal ring 21 is at least partially embedded in said annular gasket body 12.

**.** According to an embodiment, said gasket 11 comprises an elastic material, e.g., silicone rubber.

**.** According to an embodiment, said gasket 11 has a symmetrical shape relative to a midplane P passing through the centerline of the gasket body 12 and orthogonal to said axial direction A-A, except for support openings 22 created from supports for keeping a metal ring 21 inside a mold for molding said gasket body 12 about said metal ring 21.

**.** According to an embodiment, said gasket 11 has a symmetrical shape relative to a midplane P passing through the centerline of the gasket body 12 and orthogonal to said axial direction A-A, except for at least four support openings 22 created from supports for keeping a metal ring 21 inside a mold for molding said gasket body 12 about said metal ring 21.

**.** According to an embodiment, said metal ring 21 defines a predetermined metal ring distance M with respect to said outer contact surface 6 of said rotating shaft 3.

**.** When said gasket 11 is at rest, i.e., it is not fitted on said rotating shaft 3, said inner radial sealing lip 13 extends in radial direction R-R transverse to said axial direction A-A by a greater entity than said metal ring distance M.

**.** According to an embodiment, said first and second lips 14, 15 and 17, 18 are elastically deformed when they are pressed between said lever 4 and said caliper body 7.

**.** According to an embodiment, said second lips 17, 18 are more rigid than said first lips 14, 15.

**.** According to an embodiment, said different rigidity is caused by the different shape of said second lips 17, 18 with respect to said first lips 14, 15.

**.** According to an embodiment, said different rigidity is caused by the fact that said second lips 17, 18 comprise a material which is elastically more rigid than the material with which said first lips 14, 15 are made.

**.** According to an embodiment, a metal ring 21 at least partially embedded in said gasket 11 is provided. According to an embodiment, said metal ring 21 is at least partially interposed between said second outer lip 17 and said second inner lip 18, thus causing the plastic deformation of said lips to be less yielding than the one of said first outer lip 14 and first inner lip 15, which do not have any resting element interposed therebetween.

**.** According to an embodiment, said lever 4 comprises a lever abutment surface 24 abutting in axial direction A-A against a rotating shaft shoulder 25 of said rotating shaft 3, thus leaving a predefined gasket chamber distance, or height H, between said lever supporting surface 10 and said caliper sliding surface 9.

**.** When said gasket 11 is unloaded and therefore not pressed, said first lips 14, 15 extend in axial direction A-A of a first defined first lip axial extension D.

**.** Said first lip axial D is greater than said gasket chamber height H.

**.** According to an embodiment, said lever 4 comprises a lever abutment surface 24 abutting in axial direction A-A against a rotating shaft shoulder 25 of said rotating shaft 3, thus leaving a predefined gasket chamber distance, or height H, between said lever supporting surface 10 and said caliper sliding surface 9.

**.** When said gasket 11 is unloaded, thus when it is not pressed against the caliper body 7 by the lever 4, said second lips 17, 18 extend in axial direction A-A of a second defined second lip axial extension d.

**.** Said second lip axial extension d is greater than said gasket chamber height H.

**.** According to an embodiment, said gasket 11 is obtained by molding in a mold in which a metal ring 21, which remains at least partially embedded in said gasket when gasket material is introduced into said mold, is inserted beforehand into and internally supported by the mold.

**.** The present invention further relates to a mold for making said gasket 11.

**.** Said gasket mold is, in particular, a mold for making a gasket according to any of the previously described embodiments.

**.** Said mold comprises an annular chamber about an axis X-X defining an axial direction A-A.

**.** An inner radial extension orthogonal to said axis X-X protrudes from said annular chamber.

**.** At least two further axial extensions protrude from said annular chamber.

**.** Said at least two further axial extensions are annular and protrude on opposite sides of said annular chamber, thus forming a first outer axial extension and a first inner axial extension.

**.** Said first outer axial extension and first inner axial extension are axially A-A aligned with each other.

### REFERENCES

- 1: brake caliper
- 2: rotating actuating member
- 3: rotating shaft
- 4: lever
- 5: shaft sealing portion
- 6: contact outer surface
- 7: caliper body
- 8: gasket chamber
- 9: caliper sliding surface
- 10: lever supporting surface
- 11: gasket
- 12: gasket body
- 13: inner radial sealing lip
- 14: first outer lip in contact with lever
- 15: first inner lip in contact with caliper
- 16: "V"-shaped loop between the first lips
- 17: second outer lip in contact with lever
- 18: second inner lip in contact with caliper
- 19: inner depression
- 20: outer depression
- 21: metal ring
- 22: support openings
- 23: lubricant chamber
- 24: lever abutment surface
- 25: rotating shaft shoulder
- A-A: axial direction
- X-X: rotating shaft rotation axis
- D: first lip axial extension
- d: second lip axial extension
- H: gasket chamber height
- M: metal ring distance

## Claims

1. A caliper body gasket (11), wherein
said gasket (11) comprises an annular gasket body (12);
said gasket (11) comprising at least one inner radial sealing lip (13) adapted to come into contact with an outer contact surface (6) of a rotating shaft (3) having rotation axis (X-X) defining an axial direction (A-A);
wherein said gasket (11) comprises at least two first lips (14, 15), said at least two first lips (14, 15) are annular and protrude from opposite sides of said gasket body (12), forming a first outer lip (14) and a first inner lip (15); and wherein
said first outer lip (14) and first inner lip (15) are axially aligned (A-A); and wherein
said first outer lip (14) is adapted to come into contact with at least one lever supporting surface (10); and wherein
said first inner lip (15) is adapted to come into sliding contact with at least one caliper sliding surface (9),
**characterised in that**
said gasket (11) comprises at least one metal ring (21), wherein said metal ring (21) is at least partially embedded in said annular gasket body (12),
wherein said metal ring (21) is configured to press the inner radial sealing lip (13) against said outer contact surface (6) which delimits externally a shaft seal portion (5) of said rotating shaft (3).

2. A caliper body gasket (11) according to claim 1, wherein
said at least two first lips (14, 15) protrude from said gasket body (12) on opposite sides according to directions inclined with respect to both said axial direction (A-A) and a radial direction (R-R) which is orthogonal to said axial direction (A-A), forming therebetween a sideways "V"-shaped loop (16), wherein said loop (16) has concavity directed in radial direction (R-R) facing away from said inner radial sealing lip (13).

3. A caliper body gasket (11) according to claim 1 or 2, wherein
said gasket (11) comprises at least two annular second lips (17, 18) which protrude from opposite sides of said gasket body (12), forming a second outer lip (17) and a second inner lip (18);
said second outer lip (17) and second inner lip (18) are axially aligned (A-A); and wherein
said second outer lip (17) is adapted to come into contact with said at least one lever supporting surface (10); and wherein
said second inner lip (18) is adapted to come into sliding contact with said at least one caliper sliding surface (9).

4. A caliper body gasket (11) according to claim 3, wherein
when said gasket (11) is unloaded and therefore not pressed, said first lips (14, 15) extend in axial direction (A-A) of a first defined first lip axial extension (D); and wherein
when said gasket (11) is unloaded and therefore not pressed, said second lips (17, 18) extend in axial direction (A-A) of a second defined second lip axial extension (d); and wherein
said first defined first lip axial extension (D) is greater than said defined second lip axial extension (d).

5. A caliper body gasket (11) according to claim 3 or 4, wherein an inner depression (19) adapted to contain lubricant, e.g. grease, is comprised between said first inner lip (15) and said second inner lip (18).

6. A caliper body gasket (11) according to any one of the preceding claims, wherein
said gasket (11) has symmetrical shape with respect to a midplane (P) passing through the centerline of the gasket body (12) and orthogonal to said axial direction (A-A).

7. A caliper body gasket (11) according to any one of the preceding claims, wherein
said gasket (11) comprises elastic material, for example silicone rubber;
and/or wherein
said gasket (11) has symmetrical shape with respect to a midplane (P) passing through the centerline of the gasket body (12) and orthogonal to said axial direction (A-A), except for support openings (22) created from supports for keeping a metal ring (21) inside a mold for molding said gasket body (12) about said metal ring (21).

8. A brake caliper (1) comprising
at least one rotating actuation member (2), said rotating actuation member (2) comprising at least one rotating shaft (3) and a lever (4) associated with said rotating shaft (3); said rotating shaft (3) having a rotation axis (X-X) which defines an axial sealing direction (A-A); said rotating shaft (3) comprising a shaft sealing portion (5) externally delimited by an outer contact surface (6);
said brake caliper (1) comprising a caliper body (7); and wherein said at least one rotating shaft (3) is partially inserted into said caliper body (7);
said brake caliper (1) further comprising a gasket chamber (8) at least partially delimited by at least one caliper sliding surface (9) of said caliper body (7), at least one lever supporting surface (10) of said lever (4) and by said outer contact surface (6) of said at least one rotating shaft (3),
said brake caliper (1) further comprising at least one gasket (11) according to anyone of the preceding claims.

9. A brake caliper (1) according to claim 8, wherein
said at least two first lips (14, 15) protrude from said gasket body (12) on opposite sides in axial direction (A-A);
or wherein
said at least two first lips (14, 15) protrude from said gasket body (12) on opposite sides according to directions which are inclined with respect to both said axial direction (A-A) and a radial direction (R-R) which is orthogonal to said axial direction (A-A), forming therebetween a sideways "V"-shaped loop (16) with concavity directed in radial direction (R-R) facing away from said rotating shaft (3).

10. A brake caliper (1) according to claim 8 or 9, wherein
said at least one gasket (11) comprises at least two second lips (17, 18) which protrude from opposite sides of said gasket body (12), forming a second outer lip (17) and a second inner lip (18) ;
said annular second outer lip (17) and second inner lip (18) are axially aligned (A-A); and wherein
said second outer lip (17) is in contact with said at least one lever supporting surface (10); and wherein
said second inner lip (18) is in sliding contact with said at least one caliper sliding surface (9);
and/or wherein
an inner depression (19), which with said caliper sliding surface (9) delimits a lubricant chamber (23) adapted to contain lubricant, e.g. grease, is comprised between said first inner lip (15) and said second inner lip (18);
and/or wherein
an outer depression (20) is comprised between said first outer lip (14) and said second outer lip (17).

11. A brake caliper (1) according to claim 10, wherein
when said gasket (11) is unloaded, therefore when it is not pressed against the caliper body (7) by the lever (4), said first lips (14, 15) extend in axial direction (A-A) of a first defined first lip axial extension (D); and wherein
when said gasket (11) is unloaded, therefore when it is not pressed against the caliper body (7) by the lever (4), said second lips (17, 18) extend in axial direction (A-A) of a second defined second lip axial extension (d); and wherein
said first defined first lip axial extension (D) is greater than said defined second lip axial extension (d).

12. A brake caliper (1) according to any one of claims 8 to 11, wherein
said gasket (11) has symmetrical shape with respect to a midplane (P) passing through the centerline of the gasket body (12) and orthogonal to said axial direction (A-A).

13. A brake caliper (1) according to any one of claims 8 to 11, wherein
said gasket (11) comprises a metal ring (21); and wherein
said metal ring (21) is at least partially embedded in said annular gasket body (12); and wherein
said gasket (11) comprises elastic material, for example silicone rubber;
and/or wherein
said gasket (11) has symmetrical shape with respect to a midplane (P) passing through the centerline of the gasket body (12) and orthogonal to said axial direction (A-A), except for support openings (22) created from supports for keeping a metal ring (21) inside a mold for molding said gasket body (12) about said metal ring (21);
or wherein
said gasket (11) has symmetrical shape with respect to a midplane (P) passing through the centerline of the gasket body (12) and orthogonal to said axial direction (A-A), except for at least four support openings (22) created from supports for keeping a metal ring (21) inside a mold for said gasket body (12) about said metal ring (21);
and/or wherein
said metal ring (21) defines a predetermined metal ring distance (M) with respect to said outer contact surface (6) of said rotating shaft (3); and wherein
when said gasket (11) is at rest, i.e. it is not fitted on said rotating shaft (3), said inner radial sealing lip (13) extends in radial direction (R-R) transverse to said axial direction (A-A) by a greater entity than said metal ring distance (M).

14. A brake caliper (1) according to any one of claims 10 to 13, wherein
said first and second lips (14, 15 and 17, 18) are elastically deformed when pressed between said lever (4) and said caliper body (7); and wherein
said second lips (17, 18) are more rigid with respect to said first lips (14, 15); and wherein
said different rigidity is caused by the different shape of said second lips (17, 18) with respect to said first lips (14, 15);
or wherein
said different rigidity is caused by the fact that said second lips (17, 18) comprise material which is elastically more rigid with respect to the material with which said first lips (14, 15) are made;
or wherein
a metal ring (21) at least partially incorporated in said gasket (11) is further comprised; and wherein
said metal ring (21) is at least partially interposed between said second outer lip (17) and said second inner lip (18), causing the plastic deformation of said lips to be less yielding than the one of said first outer lip (14) and first inner lip (15), which do not have any resting element interposed therebetween.

15. A brake caliper (1) according to any one of claims 8 to 11, wherein
said lever (4) comprises a lever abutment surface (24) abutting in axial direction (A-A) against a rotating shaft shoulder (25) of said rotating shaft (3), leaving a predefined gasket chamber distance, or height, (H), between said lever supporting surface (10) and said caliper sliding surface (9); and wherein
when said gasket (11) is unloaded and therefore not pressed, said first lips (14, 15) extend in axial direction (A-A) of a first defined first lip axial extension (D); and wherein
said first lip axial extension (D) is greater than said gasket chamber height (H).

16. A brake caliper (1) according to any one of claims 10 to 13, wherein
said lever (4) comprises a lever abutment surface (24) abutting in axial direction (A-A) against a rotating shaft shoulder (25) of said rotating shaft (3), leaving a predefined gasket chamber distance, or height, (H), between said lever supporting surface (10) and said caliper sliding surface (9); and wherein
when said gasket (11) is unloaded, therefore when it is not pressed against the caliper body (7) by the lever (4), said second lips (17, 18) extend in axial direction (A-A) of a second defined second lip axial extension (d); and wherein
said second lip axial extension (d) is greater than said gasket chamber height (H).

17. A gasket (11) according to any one of claims 1 to 7, wherein said gasket (11) is obtained by molding in a mold wherein a metal ring (21), which remains at least partially embedded in said gasket when gasket material is introduced into said mold, is inserted beforehand into and internally supported by the mold.

18. A gasket mold for making a gasket according to any one of claims 1 to 7, wherein
said mold comprises an annular chamber extending about an axis (X-X) defining an axial direction (A-A);
an inner radial extension orthogonal to said axis (X-X) adapted to create an inner radial sealing lip (13) adapted to come into contact with an outer contact surface (6) of a rotating shaft (3) protrudes from said annular chamber;
**characterized in that**
at least two further annular axial extensions adapted to form at least two first lips (14, 15) protrude from said annular chamber;
and wherein
said at least two further axial extensions are annular and protrude on opposite sides of said annular chamber, forming a first outer axial extension and a first inner axial extension;
and wherein
Said first outer axial extension and first inner axial extension are axially (A-A) aligned with each other.

## Patentansprüche

1. Sattelkörper-Dichtung (11), wobei
die Dichtung (11) einen ringförmigen Dichtungskörper (12) umfasst;
wobei die Dichtung (11) wenigstens eine innere radiale Dichtungslippe (13) umfasst, welche dazu eingerichtet ist, mit einer äußeren Kontaktfläche (6) einer Rotationswelle (3), welche eine Rotationsachse (X-X) aufweist, welche eine axiale Richtung (A-A) definiert, in Kontakt zu treten;
wobei die Dichtung (11) wenigstens zwei erste Lippen (14, 15) umfasst, wobei die wenigstens zwei ersten Lippen (14, 15) ringförmig sind und von entgegengesetzten Seiten des Dichtungskörpers (12) vorstehen, eine erste äußere Lippe (14) und eine erste innere Lippe (15) bildend; und wobei
die erste äußere Lippe (14) und die erste innere Lippe (15) axial ausgerichtet (A-A) sind; und wobei
die erste äußere Lippe (14) dazu eingerichtet ist, mit wenigstens einer Hebelhalterungsfläche (10) in Kontakt zu treten; und wobei
die erste innere Lippe (15) dazu eingerichtet ist, in gleitenden Kontakt mit wenigstens einer Sattelgleitfläche (9) zu treten,
**dadurch gekennzeichnet, dass** die Dichtung (11) wenigstens einen Metallring (21) umfasst, wobei der Metallring (21) wenigstens teilweise in den ringförmigen Dichtungskörper (12) eingebettet ist,
wobei der Metallring (21) dazu eingerichtet ist, die innere radiale Dichtungslippe (13) gegen die äußere Kontaktfläche (6) zu drücken, welche außen einen Wellendichtungsabschnitt (5) der Rotationswelle (3) begrenzt.

2. Sattelkörper-Dichtung (11) nach Anspruch 1, wobei
die wenigstens zwei ersten Lippen (14, 15) von dem Dichtungskörper (12) an entgegengesetzten Seiten gemäß Richtungen vorstehen, welche in Bezug auf sowohl die axiale Richtung (A-A) als auch eine radiale Richtung (R-R), welche orthogonal zu der axialen Richtung (A-A) ist, geneigt sind, wobei dazwischen eine seitliche "V"-förmige Schlaufe (16) gebildet ist, wobei die Schlaufe (16) eine Konkavität aufweist, welche in die radiale Richtung (R-R) gerichtet ist, von der inneren radialen Dichtungslippe (13) abgewandt.

3. Sattelkörper-Dichtung (11) nach Anspruch 1 oder 2, wobei die Dichtung (11) wenigstens zwei ringförmige zweite Lippen (17, 18) umfasst, welche von entgegengesetzten Seiten des Dichtungskörpers (12) vorstehen, eine zweite äußere Lippe (17) und eine zweite innere Lippe (18) bildend;
wobei die zweite äußere Lippe (17) und die zweite innere Lippe (18) axial ausgerichtet (A-A) sind; und wobei
die zweite äußere Lippe (17) dazu eingerichtet ist, mit wenigstens einer Hebelhalterungsfläche (10) in Kontakt zu treten; und wobei
die zweite innere Lippe (18) dazu eingerichtet ist, in gleitenden Kontakt mit der wenigstens einen Sattelgleitfläche (9) zu treten.

4. Sattelkörper-Dichtung (11) nach Anspruch 3, wobei
wenn die Dichtung (11) entlastet und daher nicht gepresst ist, sich die ersten Lippen (14, 15) in axialer Richtung (A-A) einer ersten definierten axialen Erstreckung (D) einer ersten Lippe erstrecken; und wobei
wenn die Dichtung (11) entlastet und daher nicht gepresst ist, sich die zweiten Lippen (17, 18) in axialer Richtung (A-A) einer zweiten definierten axialen Erstreckung (d) einer zweiten Lippe erstrecken; und wobei
die erste definierte axiale Erstreckung (D) einer ersten Lippe größer als die definierte axiale Erstreckung (d) einer zweiten Lippe ist.

5. Sattelkörper-Dichtung (11) nach Anspruch 3 oder 4, wobei
eine innere Vertiefung (19), welche dazu eingerichtet ist, ein Schmiermittel, beispielsweise Fett, zu enthalten, zwischen der ersten inneren Lippe (15) und der zweiten inneren Lippe (18) umfasst ist.

6. Sattelkörper-Dichtung (11) nach einem der vorhergehenden Ansprüche, wobei
die Dichtung (11) eine symmetrische Form in Bezug auf eine Mittelebene (P) aufweist, welche durch die Mittellinie des Dichtungskörpers (12) verläuft und orthogonal zu der axialen Richtung (A-A) ist.

7. Sattelkörper-Dichtung (11) nach einem der vorhergehenden Ansprüche, wobei
die Dichtung (11) ein elastisches Material, beispielsweise Silikonkautschuk, umfasst; und/oder wobei
die Dichtung (11) eine symmetrische Form in Bezug auf eine Mittelebene (P) aufweist, welche durch die Mittellinie des Dichtungskörpers (12) verläuft und orthogonal zu der axialen Richtung (A-A) ist, mit der Ausnahme von Halterungsöffnungen (22), welche aus Halterungen zum Halten eines Metallrings (21) innerhalb einer Form zum Formen des Dichtungskörpers (12) um den Metallring (21) erzeugt sind.

8. Bremssattel (1), umfassend
wenigstens ein Rotationsbetätigungselement (2), wobei das Rotationsbetätigungselement (2) wenigstens eine Rotationswelle (3) und einen Hebel (4) umfasst, welcher der Rotationswelle (3) zugeordnet ist; wobei die Rotationswelle (3) eine Rotationsachse (X-X) aufweist, welche eine axiale Dichtungsrichtung (A-A) definiert; wobei die Rotationswelle (3) einen Schaftdichtungsabschnitt (5) umfasst, welcher außen durch eine äußere Kontaktfläche (6) begrenzt ist;
wobei der Bremssattel (1) einen Sattelkörper (7) umfasst; und wobei die wenigstens eine Rotationswelle (3) teilweise in den Sattelkörper (7) eingesetzt ist;
wobei der Bremssattel (1) ferner eine Dichtungskammer (8) umfasst, welche wenigstens teilweise durch wenigstens eine Sattelgleitfläche (9) des Sattelkörpers (7), wenigstens eine Hebelhalterungsfläche (10) des Hebels (4) und durch die äußere Kontaktfläche (6) der wenigstens einen Rotationswelle (3) begrenzt ist,
wobei der Bremssattel (1) ferner wenigstens eine Dichtung (11) gemäß einem der vorhergehenden Ansprüche umfasst.

9. Bremssattel (1) nach Anspruch 8, wobei
die wenigstens zwei ersten Lippen (14, 15) von dem Dichtungskörper (12) an entgegengesetzten Seiten in axialer Richtung (A-A) vorstehen;
oder wobei
die wenigstens zwei ersten Lippen (14, 15) von dem Dichtungskörper (12) an entgegengesetzten Seiten gemäß Richtungen vorstehen, welche in Bezug auf sowohl die axiale Richtung (A-A) als auch eine radiale Richtung (R-R), welche orthogonal zu der axialen Richtung (A-A) ist, geneigt sind, wobei dazwischen eine seitliche "V"-förmige Schlaufe (16) mit einer Konkavität gebildet ist, welche in die radiale Richtung (R-R) gerichtet ist, von der Rotationswelle (3) abgewandt.

10. Bremssattel (1) nach Anspruch 8 oder 9, wobei
die wenigstens eine Dichtung (11) wenigstens zwei zweite Lippen (17, 18) umfasst, welche von entgegengesetzten Seiten des Dichtungskörpers (12) vorstehen, eine zweite äußere Lippe (17) und eine zweite innere Lippe (18) bildend;
wobei die ringförmige zweite äußere Lippe (17) und die zweite innere Lippe (18) axial ausgerichtet (A-A) sind; und wobei
die zweite äußere Lippe (17) mit der wenigstens einen Hebelhalterungsfläche (10) in Kontakt tritt; und wobei
die zweite innere Lippe (18) in gleitenden Kontakt mit der wenigstens einen Sattelgleitfläche (9) tritt;
und/oder wobei
eine innere Vertiefung (19), mit welcher die Sattelgleitfläche (9) eine Schmiermittelkammer (23) definiert, welche dazu eingerichtet ist, ein Schmiermittel, beispielsweise Fett, zu enthalten, zwischen der ersten inneren Lippe (15) und der zweiten inneren Lippe (18) umfasst ist;
und/oder wobei
eine äußere Vertiefung (20) zwischen der ersten äußeren Lippe (14) und der zweiten äußeren Lippe (17) umfasst ist.

11. Bremssattel (1) nach Anspruch 10, wobei,
wenn die Dichtung (11) entlastet ist, wobei sie daher nicht durch den Hebel (4) gegen den Sattelkörper (7) gepresst ist, sich die ersten Lippen (14, 15) in axialer Richtung (A-A) einer ersten definierten axialen Erstreckung (D) einer ersten Lippe erstrecken; und
wobei,
wenn die Dichtung (11) entlastet ist, wobei sie daher nicht durch den Hebel (4) gegen den Sattelkörper (7) gepresst ist, sich die zweiten Lippen (17, 18) in axialer Richtung (A-A) einer zweiten definierten axialen Erstreckung (d) einer zweiten Lippe erstrecken; und
wobei
die erste definierte axiale Erstreckung (D) einer ersten Lippe größer als die definierte axiale Erstreckung (d) einer zweiten Lippe ist.

12. Bremssattel (1) nach einem der Ansprüche 8 bis 11,
wobei
die Dichtung (11) eine symmetrische Form in Bezug auf eine Mittelebene (P) aufweist, welche durch die Mittellinie des Dichtungskörpers (12) verläuft und orthogonal zu der axialen Richtung (A-A) ist.

13. Bremssattel (1) nach einem der Ansprüche 8 bis 11,
wobei
die Dichtung (11) einen Metallring (21) umfasst; und wobei
der Metallring (21) wenigstens teilweise in den ringförmigen Dichtungskörper (12) eingebettet ist, und wobei
die Dichtung (11) ein elastisches Material, beispielsweise Silikonkautschuk, umfasst;
und/oder wobei
die Dichtung (11) eine symmetrische Form in Bezug auf eine Mittelebene (P) aufweist, welche durch die Mittellinie des Dichtungskörpers (12) verläuft und orthogonal zu der axialen Richtung (A-A) ist, mit der Ausnahme von Halterungsöffnungen (22), welche aus Halterungen zum Halten eines Metallrings (21) innerhalb einer Form zum Formen des Dichtungskörpers (12) um den Metallring (21) erzeugt sind;
oder wobei
die Dichtung (11) eine symmetrische Form in Bezug auf eine Mittelebene (P) aufweist, welche durch die Mittellinie des Dichtungskörpers (12) verläuft und orthogonal zu der axialen Richtung (A-A) ist, mit der Ausnahme von wenigstens vier Halterungsöffnungen (22), welche aus Halterungen zum Halten eines Metallrings (21) innerhalb einer Form für den Dichtungskörper (12) um den Metallring (21) erzeugt sind;
und/oder wobei
der Metallring (21) einen vorbestimmten Metallringabstand (M) in Bezug auf die äußere Kontaktfläche (6) der Rotationswelle (3) definiert; und wobei
wenn sich die Dichtung (11) in Ruhe befindet, d.h. sie nicht auf die Rotationswelle (3) gepasst ist, sich die innere radiale Dichtungslippe (13) in radialer Richtung (R-R) transversal zu der axialen Richtung (A-A) um eine größere Einheit als der Metallringabstand (M) erstreckt.

14. Bremssattel (1) nach einem der Ansprüche 10 bis 13,
wobei die ersten und die zweiten Lippen (14, 15 und 17, 18) elastisch verformt sind, wenn sie zwischen dem Hebel (4) und dem Sattelkörper (7) gepresst sind; und wobei die zweiten Lippen (17, 18) in Bezug auf die ersten Lippen (14, 15) steifer sind; und
wobei
die verschiedene Steifigkeit durch die verschiedene Form der zweiten Lippen (17, 18) in Bezug auf die ersten Lippen (14, 15) bewirkt ist;
oder wobei
die verschiedene Steifigkeit durch die Tatsache bewirkt ist, dass die zweiten Lippen (17, 18) ein Material umfassen, welches in Bezug auf das Material, mit welchem die ersten Lippen (14, 15) hergestellt sind, elastisch steifer ist;
oder wobei
ferner ein Metallring (21) umfasst ist, welcher wenigstens teilweise in die Dichtung (11) integriert ist; und wobei
der Metallring (21) wenigstens teilweise zwischen der zweiten äußeren Lippe (17) und der zweiten inneren Lippe (18) eingefügt ist, wodurch bewirkt wird, dass die plastische Verformung der Lippen weniger nachgiebig als diejenige der ersten äußeren Lippe (14) und der ersten inneren Lippe (15) ist, welche keinerlei dazwischen eingefügtes Stützelement aufweisen.

15. Bremssattel (1) nach einem der Ansprüche 8 bis 11,
wobei
der Hebel (4) eine Hebelanlagefläche (24) umfasst, welche in axialer Richtung (A-A) gegen eine Rotationswellenschulter (25) der Rotationswelle (3) anliegt, wobei ein vordefinierter Dichtungskammerabstand oder eine vordefinierte Dichtungskammerhöhe (H) zwischen der Hebelhalterungsfläche (10) und der Sattelgleitfläche (9) gelassen ist;
und wobei
wenn die Dichtung (11) entlastet und daher nicht gepresst ist, sich die ersten Lippen (14, 15) in axialer Richtung (A-A) einer ersten definierten axialen Lippenerstreckung (D) erstrecken; und wobei
die erste axiale Lippenerstreckung (D) größer als die Dichtungskammerhöhe (H) ist.

16. Bremssattel (1) nach einem der Ansprüche 10 bis 13,
wobei
der Hebel (4) eine Hebelanlagefläche (24) umfasst, welche in axialer Richtung (A-A) gegen eine Rotationswellenschulter (25) der Rotationswelle (3) anliegt, wobei ein vordefinierter Dichtungskammerabstand oder eine vordefinierte Dichtungskammerhöhe (H) zwischen der Hebelhalterungsfläche (10) und der Sattelgleitfläche (9) gelassen ist;
und wobei
wenn die Dichtung (11) entlastet und daher nicht durch den Hebel (4) gegen den Sattelkörper (7) gepresst ist, sich die zweiten Lippen (17, 18) in axialer Richtung (A-A) einer zweiten definierten axialen Erstreckung (d) einer zweiten Lippe erstrecken; und
wobei
die axiale Erstreckung (d) einer zweiten Lippe größer als die Dichtungskammerhöhe (H) ist.

17. Dichtung nach einem der Ansprüche 1 bis 7, wobei die Dichtung (11) durch Formen in einer Form erhalten ist, wobei ein Metallring (21), welcher wenigstens teilweise in der Dichtung eingebettet bleibt, wenn ein Dichtungsmaterial in die Form eingeleitet wird, zuvor in die Form eingefügt worden ist und innen durch die Form gehaltert ist.

18. Dichtungsform zur Herstellung einer Dichtung nach einem der Ansprüche 1 bis 7, wobei die Form eine ringförmige Kammer umfasst, welche sich um eine Achse (X-X) erstreckt, welche eine axiale Richtung (A-A) definiert;
eine innere radiale Erstreckung orthogonal zu der Achse (X-X), welche dazu eingerichtet ist, eine innere radiale Dichtungslippe (13) zu erzeugen, welche dazu eingerichtet ist, in Kontakt mit einer äußeren Kontaktfläche (6) einer Rotationswelle (3) zu treten, von der ringförmigen Kammer vorsteht;
**dadurch gekennzeichnet, dass**
wenigstens zwei weitere axiale Erstreckungen, welche dazu eingerichtet sind, wenigstens zwei erste Lippen (14, 15) zu bilden, von der ringförmigen Kammer vorstehen;
und wobei
die wenigstens zwei weiteren axialen Erstreckungen ringförmig sind und an entgegengesetzten Seiten der ringförmigen Kammer vorstehen, eine erste äußere axiale Erstreckung und eine erste innere axiale Erstreckung bildend;
und wobei
die erste äußere axiale Erstreckung und die erste innere axiale Erstreckung axial (A-A) zueinander ausgerichtet sind.

## Revendications

1. Joint de corps d'étrier (11), dans lequel
ledit joint (11) comprend un corps de joint annulaire (12) ;
ledit joint (11) comprenant au moins une lèvre d'étanchéité radiale intérieure (13) adaptée pour venir en contact avec une surface de contact extérieure (6) d'un arbre rotatif (3) ayant un axe de rotation (X-X) définissant une direction axiale (A-A) ;
dans lequel
ledit joint (11) comprend au moins deux premières lèvres (14, 15), lesdites au moins deux premières lèvres (14, 15) sont annulaires et font saillie depuis des côtés opposés dudit corps de joint (12), formant une première lèvre extérieure (14) et une première lèvre intérieure (15) ; et dans lequel
ladite première lèvre extérieure (14) et ladite première lèvre intérieure (15) sont alignées axialement (A-A) ; et dans lequel
ladite première lèvre extérieure (14) est adaptée pour venir en contact avec au moins une surface de support de levier (10) ; et dans lequel
ladite première lèvre intérieure (15) est adaptée pour venir en contact glissant avec au moins une surface glissante d'étrier (9),
**caractérisé en ce que**
ledit joint (11) comprend au moins une bague métallique (21),
dans lequel ladite bague métallique (21) est au moins partiellement intégrée dans ledit corps de joint annulaire (12),
dans lequel ladite bague métallique (21) est configurée pour presser la lèvre d'étanchéité radiale intérieure (13) contre ladite surface de contact extérieure (6) qui délimite extérieurement une partie étanche d'arbre (5) dudit arbre rotatif (3).

2. Joint de corps d'étrier (11) selon la revendication 1, dans lequel lesdites au moins deux premières lèvres (14, 15) font saillie depuis ledit corps de joint (12) sur des côtés opposés selon des directions inclinées par rapport à la fois à ladite direction axiale (A-A) et à une direction radiale (R-R) qui est orthogonale à ladite direction axiale (A-A), formant entre elles une boucle latérale en forme de « V » (16), dans lequel ladite boucle (16) a une concavité dirigée dans une direction radiale (R-R) faisant face à l'opposé de ladite lèvre d'étanchéité radiale intérieure (13).

3. Joint de corps d'étrier (11) selon la revendication 1 ou 2, dans lequel ledit joint (11) comprend au moins deux secondes lèvres annulaires (17, 18) qui font saillie depuis des côtés opposés dudit corps de joint (12), formant une seconde une lèvre extérieure (17) et une seconde lèvre intérieure (18) ;
lesdites seconde lèvre extérieure (17) et seconde lèvre intérieure (18) sont alignées axialement (A-A) ; et dans lequel
ladite seconde lèvre extérieure (17) est adaptée pour venir en contact avec ladite au moins une surface de support de levier (10) ; et dans lequel
ladite seconde lèvre intérieure (18) est adaptée pour venir en contact glissant avec ladite au moins une surface glissante d'étrier (9).

4. Joint de corps d'étrier (11) selon la revendication 3, dans lequel, lorsque ledit joint (11) est déchargé et donc non pressé, lesdites premières lèvres (14, 15) s'étendent dans la direction axiale (A-A) d'une première extension axiale de première lèvre définie (D) ; et dans lequel
lorsque ledit joint (11) est déchargé et donc non pressé, lesdites secondes lèvres (17, 18) s'étendent dans la direction axiale (A-A) d'une seconde extension axiale de seconde lèvre définie (d) ; et dans lequel
ladite première extension axiale de première lèvre définie (D) est supérieure à ladite extension axiale de seconde lèvre définie (d).

5. Joint de corps d'étrier (11) selon la revendication 3 ou 4, dans lequel une dépression intérieure (19) adaptée pour contenir du lubrifiant, par exemple de la graisse, est comprise entre ladite première lèvre intérieure (15) et ladite seconde lèvre intérieure (18).

6. Joint de corps d'étrier (11) selon l'une quelconque des revendications précédentes, dans lequel
ledit joint (11) a une forme symétrique par rapport à un plan médian (P) passant par la ligne centrale du corps de joint (12) et orthogonal à ladite direction axiale (A-A).

7. Joint de corps d'étrier (11) selon l'une quelconque des revendications précédentes, dans lequel
ledit joint (11) comprend un matériau élastique, par exemple du caoutchouc silicone ;
et/ou dans lequel
ledit joint (11) a une forme symétrique par rapport à un plan médian (P) passant par la ligne centrale du corps de joint (12) et orthogonal à ladite direction axiale (A-A), à l'exception d'ouvertures de support (22) créées à partir de supports pour maintenir une bague métallique (21) à l'intérieur d'un moule pour mouler ledit corps de joint (12) autour de ladite bague métallique (21).

8. Étrier de frein (1) comprenant
au moins un élément d'actionnement rotatif (2), ledit élément d'actionnement rotatif (2) comprenant au moins un arbre rotatif (3) et un levier (4) associé audit arbre rotatif (3) ; ledit arbre rotatif (3) ayant un axe de rotation (X-X) qui définit une direction d'étanchéité axiale (A-A) ; ledit arbre rotatif (3) comprenant une partie d'étanchéité d'arbre (5) délimitée extérieurement par une surface de contact extérieure (6) ;
ledit étrier de frein (1) comprenant un corps d'étrier (7) ; et dans lequel ledit au moins un arbre rotatif (3) est partiellement inséré dans ledit corps d'étrier (7) ;
ledit étrier de frein (1) comprenant en outre une chambre de joint (8) au moins partiellement délimitée par au moins une surface glissante d'étrier (9) dudit corps d'étrier (7), au moins une surface de support de levier (10) dudit levier (4) et par ladite surface de contact extérieure (6) dudit au moins un arbre rotatif (3),
ledit étrier de frein (1) comprenant en outre au moins un joint (11) selon l'une quelconque des revendications précédentes.

9. Étrier de frein (1) selon la revendication 8, dans lequel
lesdites au moins deux premières lèvres (14, 15) font saillie depuis ledit corps de joint (12) sur des côtés opposés dans une direction axiale (A-A) ;
ou dans lequel
lesdites au moins deux premières lèvres (14, 15) font saillie depuis ledit corps de joint (12) sur des côtés opposés selon des directions qui sont inclinées par rapport à la fois à ladite direction axiale (A-A) et à une direction radiale (R-R) qui est orthogonale à ladite direction axiale (A-A), formant entre elles une boucle latérale en forme de « V » (16) avec une concavité dirigée dans une direction radiale (R-R) faisant face à l'opposé dudit arbre rotatif (3).

10. Étrier de frein (1) selon la revendication 8 ou 9, dans lequel
ledit au moins un joint (11) comprend au moins deux secondes lèvres (17, 18) qui font saillie depuis des côtés opposés dudit corps de joint (12), formant une seconde lèvre extérieure (17) et une seconde lèvre intérieure (18) ;
lesdites seconde lèvre extérieure (17) et seconde lèvre intérieure (18) annulaires sont alignées axialement (A-A) ; et dans lequel
ladite seconde lèvre extérieure (17) est en contact avec ladite au moins une surface de support de levier (10) ; et dans lequel
ladite seconde lèvre intérieure (18) est en contact glissant avec ladite au moins une surface glissante d'étrier (9) ;
et/ou dans lequel
une dépression intérieure (19) qui, avec ladite surface glissante d'étrier (9), délimite une chambre de lubrifiant (23) adaptée pour contenir du lubrifiant, par exemple de la graisse, est comprise entre ladite première lèvre intérieure (15) et ladite seconde lèvre intérieure (18) ;
et/ou dans lequel
une dépression extérieure (20) est comprise entre ladite première lèvre extérieure (14) et ladite seconde lèvre extérieure (17).

11. Étrier de frein (1) selon la revendication 10, dans lequel
lorsque ledit joint (11) est déchargé, lorsqu'il n'est donc pas pressé contre le corps d'étrier (7) par le levier (4), lesdites premières lèvres (14, 15) s'étendent dans la direction axiale (A-A) d'une première extension axiale de première lèvre définie (D) ; et dans lequel
lorsque ledit joint (11) est déchargé, lorsqu'il n'est donc pas pressé contre le corps d'étrier (7) par le levier (4), lesdites secondes lèvres (17, 18) s'étendent dans la direction axiale (A-A) d'une seconde extension axiale de seconde lèvre définie (d) ; et dans lequel
ladite première extension axiale de première lèvre définie (D) est supérieure à ladite extension axiale de seconde lèvre définie (d).

12. Étrier de frein (1) selon l'une quelconque des revendications 8 à 11, dans lequel
ledit joint (11) a une forme symétrique par rapport à un plan médian (P) passant par la ligne centrale du corps de joint (12) et orthogonal à ladite direction axiale (A-A).

13. Étrier de frein (1) selon l'une quelconque des revendications 8 à 11, dans lequel
ledit joint (11) comprend une bague métallique (21) ; et dans lequel
ladite bague métallique (21) est au moins partiellement intégrée dans ledit corps de joint annulaire (12) ; et dans lequel
ledit joint (11) comprend un matériau élastique, par exemple du caoutchouc silicone ;
et/ou dans lequel
ledit joint (11) a une forme symétrique par rapport à un plan médian (P) passant par la ligne centrale du corps de joint (12) et orthogonal à ladite direction axiale (A-A), à l'exception d'ouvertures de support (22) créées à partir de supports pour maintenir une bague métallique (21) à l'intérieur d'un moule pour mouler ledit corps de joint (12) autour de ladite bague métallique (21) ;
ou dans lequel
ledit joint (11) a une forme symétrique par rapport à un plan médian (P) passant par la ligne centrale du corps de joint (12) et orthogonal à ladite direction axiale (A-A), à l'exception d'au moins quatre ouvertures de support (22) créées à partir de supports pour maintenir une bague métallique (21) à l'intérieur d'un moule pour ledit corps de joint (12) autour de ladite bague métallique (21) ;
et/ou dans lequel
ladite bague métallique (21) définit une distance prédéterminée de bague métallique (M) par rapport à ladite surface de contact extérieure (6) dudit arbre rotatif (3) ; et dans lequel
lorsque ledit joint (11) est au repos, c'est-à-dire qu'il n'est pas monté sur ledit arbre rotatif (3), ladite lèvre d'étanchéité radiale intérieure (13) s'étend dans la direction radiale (R-R) transversale à ladite direction axiale (A-A) d'une plus grande entité que ladite distance de bague métallique (M).

14. Étrier de frein (1) selon l'une quelconque des revendications 10 à 13, dans lequel
lesdites premières et secondes lèvres (14, 15 et 17, 18) sont déformées élastiquement lorsqu'elles sont pressées entre ledit levier (4) et ledit corps d'étrier (7) ; et dans lequel
lesdites secondes lèvres (17, 18) sont plus rigides par rapport auxdites premières lèvres (14, 15) ; et dans lequel
ladite rigidité différente est provoquée par la forme différente desdites secondes lèvres (17, 18) par rapport auxdites premières lèvres (14, 15) ; ou dans lequel
ladite rigidité différente est provoquée par le fait que lesdites secondes lèvres (17, 18) comprennent un matériau qui est élastiquement plus rigide par rapport au matériau avec lequel sont constituées lesdites premières lèvres (14, 15) ;
ou dans lequel
une bague métallique (21) au moins partiellement incorporée dans ledit joint (11) est comprise en plus ; et dans lequel
ladite bague métallique (21) est au moins partiellement interposée entre ladite seconde lèvre extérieure (17) et ladite seconde lèvre intérieure (18), amenant la déformation plastique desdites lèvres à être moins élastique que celle de ladite première lèvre extérieure (14) et de la première lèvre intérieure (15), qui n'ont aucun élément d'appui interposé entre elles.

15. Étrier de frein (1) selon l'une quelconque des revendications 8 à 11, dans lequel
ledit levier (4) comprend une surface de butée de levier (24) venant en butée dans la direction axiale (A-A) contre un épaulement d'arbre rotatif (25) dudit arbre rotatif (3), laissant une distance, ou hauteur, (H), de chambre de joint prédéfinie entre ladite surface de support de levier (10) et ladite surface glissante d'étrier (9) ; et dans lequel
lorsque ledit joint (11) est déchargé et donc non pressé, lesdites premières lèvres (14, 15) s'étendent dans la direction axiale (A-A) d'une première extension axiale de première lèvre définie (D) ; et dans lequel
ladite extension axiale de première lèvre (D) est supérieure à ladite hauteur (H) de chambre de j oint.

16. Étrier de frein (1) selon l'une quelconque des revendications 10 à 13, dans lequel
ledit levier (4) comprend une surface de butée de levier (24) venant en butée dans la direction axiale (A-A) contre un épaulement d'arbre rotatif (25) dudit arbre rotatif (3), laissant une distance, ou hauteur (H), de chambre de joint prédéfinie entre ladite surface de support de levier (10) et ladite surface glissante d'étrier (9) ; et dans lequel
lorsque ledit joint (11) est déchargé, lorsqu'il n'est donc pas pressé contre le corps d'étrier (7) par le levier (4), lesdites secondes lèvres (17, 18) s'étendent dans la direction axiale (A-A) d'une seconde extension axiale de seconde lèvre définie (d) ; et dans lequel
ladite extension axiale de seconde lèvre (d) est supérieure à ladite hauteur (H) de chambre de j oint.

17. Joint (11) selon l'une quelconque des revendications 1 à 7, dans lequel ledit joint (11) est obtenu par moulage dans un moule dans lequel une bague métallique (21), qui reste au moins partiellement intégrée dans ledit joint lorsqu'un matériau du joint est introduit dans ledit moule, est insérée au préalable dans le moule, et supportée intérieurement par celui-ci.

18. Moule de joint pour fabriquer un joint selon l'une quelconque des revendications 1 à 7, dans lequel
ledit moule comprend une chambre annulaire s'étendant autour d'un axe (X-X) définissant une direction axiale (A-A) ;
une extension radiale intérieure orthogonale audit axe (X-X) adaptée pour créer une lèvre d'étanchéité radiale intérieure (13) adaptée pour venir en contact avec une surface de contact extérieure (6) d'un arbre rotatif (3) fait saillie depuis ladite chambre annulaire ;
**caractérisé en ce que**
au moins deux autres extensions axiales annulaires adaptées pour former au moins deux premières lèvres (14, 15) font saillie depuis ladite chambre annulaire ; et dans lequel
lesdites au moins deux autres extensions axiales sont annulaires et font saillie sur des côtés opposés de ladite chambre annulaire, formant une première extension axiale extérieure et une première extension axiale intérieure ; et dans lequel
lesdites première extension axiale extérieure et première extension axiale intérieure sont alignées axialement (A-A) l'une avec l'autre.
